# EUROPÄISCHE PATENTSCHRIFT

(11) **EP 2 389 512 B1**
(45) Veröffentlichungstag und Bekanntmachung des Hinweises auf die Patenterteilung: **03.04.2013**
(21) Anmeldenummer: 09765058.4
(22) Anmeldetag: 19.11.2009
(51) Int. Cl.: F03D 9/00, H02K 1/27, H02K 7/18, H02K 15/03

(54) **VERFAHREN ZUR HERSTELLUNG EINES EIN POLRAD UMFASSENDES MAGNETSYSTEMS**
METHOD FOR PRODUCING A MAGNETIC SYSTEM COMPRISING A POLE WHEEL
PROCÉDÉ POUR PRODUIRE UN SYSTÈME MAGNÉTIQUE COMPORTANT UNE ROUE POLAIRE

(30) Priorität: 23.01.2009 DE 102009005957
(43) Veröffentlichungstag der Anmeldung: 30.11.2011
(73) Patentinhaber: Avantis Ltd., Hong Kong (CN)
(72) Erfinder: LANGE, Detlef, 46147 Oberhausen (DE); RUPPRICH, Dieter, 48465 Ohne (DE); BODENSTEIN, Klaus, Hong Kong (CN)
(74) Vertreter: Viering, Jentschura & Partner
(86) Internationale Anmeldenummer: PCT/EP2009/065459
(87) Internationale Veröffentlichungsnummer: WO 2010/083907

(56) Entgegenhaltungen:
- DE-A1- 4 402 184
- DE-A1- 4 437 972
- DE-A1-102004 031 329

## Beschreibung

Die Erfindung richtet sich auf ein Verfahren zur Herstellung eines ein Polrad umfassenden Magnetsystems eines vielpoligen Generators einer Windkraftanlage oder Windenergieanlage, umfassend die Verbindung eines Polradgehäuses mit mindestens einem, eine Vielzahl kreisringförmig angeordnete Einzelpermanentmagnete aufweisenden Magnetring oder einem mindestens einen Magnetring und einen diesen tragenden Träger aufweisenden Magnetrad durch Erwärmen des Polradgehäuses auf eine Temperatur, bei der sich der Innendurchmesser einer eine Aufnahmefläche ausbildenden Innenumfangsfläche des Polradgehäuses auf eine Größe ausdehnt, die größer als der Außendurchmesser des Magnetrings oder des Magnetrads ist, die Anordnung des mindestens einen Magnetrings oder des Magnetrads in oder an der Aufnahmefläche und das Aufschrumpfen des Polradgehäuses auf den mindestens einen Magnetring oder das Magnetrad durch Abkühlung des Polradgehäuses auf Raum- oder Umgebungstemperatur. Weiterhin richtet sich die Erfindung auf Magnetsystem eines vielpoligen Generators einer Windkraftanlage oder einer Windenergieanlage, umfassend ein ein Polradgehäuse aufweisendes Polrad mit mindestens einem in dem Polradgehäuse angeordneten, aus einem Träger mit daran angeordneten Einzelpermanentmagneten aufgebauten Magnetring und/oder mit einem einen solchen Magnetring aufweisenden Magnetrad.

Ein ringförmiges Magnetsystem eines Rotors eines vielpoligen Generators in Form eines Außenläufers ist üblicherweise zur Verminderung von Wirbelstromverlusten nicht massiv aufgebaut, sondern besteht aus einzelnen isolierten mit Einzelpermanentmagneten bestückten Blechringen oder Magnetringen. Diese Magnetringe werden entsprechend der axialen Gesamtlänge des Generators zu einem Paket in Form eines Magnetrades aufgestapelt. Dabei bildet ein aus einzelnen Blechsegmenten oder Metallsegmenten bestehender Träger einen dünnwandigen Rückschlussring, der dazu dient, die Magnetfeldlinien zu leiten und das Paket magnetisch nach außen abzuschirmen. Dabei erhält ein solches Paket seine mechanische Festigkeit in axialer Richtung dadurch, dass Halterungen oder Streben in magnetisch unbelastete Zonen eingeschweißt werden und so die einzelnen Magnetringe oder die Träger zusammenhalten.

Der Herstellung eines Trägers und eines Magnetringes für einen Außenläufer sind bezüglich des verhältnismäßig großen Durchmessers eines Polrades eines Generators einer Windenergieanlage fertigungstechnische und wirtschaftliche Grenzen gesetzt, so dass bei großen Durchmessern jeder einzelne ringförmige Träger aus einzelnen Metallsegmenten zusammengesetzt ist, die auf der Trägerinnenseite zu einem Ring zusammengefügte einzelne Magnetsegmente aufweisen und so einen Magnetring ausbilden. Die Anbringung des aus mehreren Magnetsegmenten und mehreren Metallsegmenten gebildeten Magnetrings in einem Polradgehäuse erfolgt üblicherweise mittels einer Klemmverbindung zwischen den einzelnen jeweils aneinanderliegenden Segmenten nach Art eines Gewölbes. Dazu wird das Polradgehäuse erwärmt, wodurch es sich weitet und mindestens ein Magnetring oder ein mehrere Magnetringe umfassendes Magnetrad leicht in das Polradgehäuse eingebracht werden kann. Wenn anschließend das Polradgehäuse abkühlt, entsteht zwischen dem Polradgehäuse und dem Magnetring oder dem Magnetrad eine Klemmverbindung, bei der die einzelnen Metallsegmente und/oder die einzelnen Magnetsegmente infolge der zwischen den Segmenten jeweils vorherrschenden Druckspannung zusammengehalten werden. Auf diese Weise werden das Polradgehäuse und der Magnetring oder das Magnetrad nach Art einer Schrumpfverbindung miteinander unter Ausbildung eines Magnetsystems des Rotors oder des Generators verbunden.

Die vorstehend genannte Verbindung muss dabei in der Lage sein, die von den Rotorblättern der Windenergieanlage erzeugten und auf das Polradgehäuse übertragenen Drehmomente auf einen Stator des Generators zu übertragen. Allerdings ist bei den heutigen Durchmessergrößen der Polräder und damit auch der Magnetringe und Magneträder der zwischen den einzelnen Metallsegmenten und/oder den einzelnen Magnetsegmenten vorherrschende Fugendruck der Klemm- bzw. Schrumpfverbindung nicht mehr ausreichend hoch genug, um die mechanische Stabilität der Ringform des aus kreisabschnittsförmigen Metallsegmenten bestehenden Trägers und der aus Einzelpermanentmagneten bestehenden Ringform auf dessen Innenumfangsfläche sicher zu stellen, weil aufgrund der hohen Polzahlen die Wanddicke des Trägers und des Magnetrings in Bezug auf den Durchmesser des Magnetrings relativ klein geworden ist.

DE 102004031329 offenbart ein Beispiel eines Magnetsystems eines vielpoligen Generators.

Der Erfindung liegt die Aufgabe zugrunde, eine Lösung zu schaffen, die eine zuverlässige und hochfeste Verbindung zwischen einem Magnetring oder einem Magnetrad und einem Polradgehäuse eines Polrades eines vielpoligen Generators einer Windkraftanlage oder Windenergieanlage bei gleichzeitig einfacher und kostengünstiger Montage bereitstellt.

Bei einem Verfahren der eingangs bezeichneten Art wird diese Aufgabe erfindungsgemäß dadurch gelöst, dass vor dem Erwärmen des Polradgehäuses und/oder vor dem Anordnen des Magnetrings oder des Magnetrads und/oder vor der Abkühlung des Polradgehäuses die Außenumfangsfläche des mindestens einen Magnetrings oder Magnetrads und/oder die Aufnahmefläche derart mit einem Klebemittel versehen wird, dass sich beim Aufschrumpfen des Polradgehäuses aus dem Klebemittel eine stoffschlüssige Verbindung zwischen dem Polradgehäuse und dem mindestens einen Magnetring oder Magnetrad ausbildet.

Ebenso wird die vorstehende Aufgabe bei einem Magnetsystem der eingangs bezeichneten Art erfindungsgemäß dadurch gelöst, dass das Polrad zwischen seinem Polradgehäuse und dem mindestens einen Magnetring oder dem Magnetrad eine stoffschlüssige Verbindung aufweist, wobei das Magnetsystem mittels eines Verfahrens nach einem der Ansprüche 1 bis 6 hergestellt ist.

Vorteilhafte und zweckmäßige Ausgestaltungen und Weiterbildungen der Erfindung ergeben sich aus den jeweiligen Unteransprüchen.

Mit der Erfindung wird ein kostengünstiges Verfahren zur Herstellung eines Polrades und damit eines ein Polrad umfassendes Magnetsystems eines vielpoligen Generators einer Windenergieanlage oder Windkraftanlage bereitgestellt, welches eine sichere und hochfeste Verbindung zwischen einem Polradgehäuse und einem Magnetring oder einem Magnetrad ausbildet. Somit können in Bezug auf ihren Durchmesser auch dünnwandige Magnetringe oder Magneträder für große Generatoren mit Leistungen im Megawattbereich und Rotorgehäuse- oder Polradgehäusedurchmessern von mehreren Metern, beispielsweise 10 m, hergestellt werden, weil die Stabilität der Verbindung zwischen dem Polradgehäuse und einem Magnetring oder einem Magnetrad nun nicht mehr allein auf der Klemmkraft der einzelnen Metall - und Magnetsegmente beruht, sondern zusätzlich zu dieser kraftschlüssigen Verbindung eine stoffschlüssige Verbindung zwischen dem Polradgehäuse und dem Magnetring oder dem Magnetrad bereitgestellt ist, welche die Belastbarkeit und die Dauerfestigkeit der Verbindung von Polradgehäuse und Magnetring oder Magnetrad steigert.

Hierbei kann weiterhin vorgesehen sein, dass beim Aufschrumpfen eine kraftschlüssige Verbindung zwischen jeweils aneinander liegenden Einzelpermanentmagneten und/oder zwischen jeweils aneinander liegenden, mehrere Einzelpermanentmagnete umfassenden Magnetsegmenten und/oder zwischen jeweils aneinander liegenden, den Träger ausbildenden Blech- oder Metallsegmenten ausgebildet wird.

Die Erfindung sieht in zweckmäßiger Weiterbildung ferner vor, dass ein anaerob härtendes Klebemittel (15) verwendet wird. Dadurch, dass beim Schrumpfen infolge der Abkühlung des Polradgehäuses die Fuge zwischen Polradgehäuse und Magnetsystem verschwindend klein wird und dadurch dem Klebemittel Sauerstoff entzogen wird, ist es möglich, dass eine hochfeste Verbindung in der Fuge zwischen dem Magnetring oder Magnetrad und dem Polradgehäuse erst während des Abkühlens des Polradgehäuses entsteht.

Um hinsichtlich des Materials des Polradgehäuses flexibel zu sein, so dass dieses nicht aus Metall bestehen muss oder eine Metallinnenfläche aufweisen muss, sieht die Erfindung in weiterer Ausgestaltung vor, dass vor einer Benetzung mit dem anaerob härtenden Klebemittel ein Aktivator auf die Außenumfangsfläche des mindestens einen Magnetrings oder des Magnetrads und/oder auf die Aufnahmefläche aufgebracht wird. Dadurch ist es möglich, dass das Polradgehäuse auch aus einem für das anaerob härtende Klebemittel passiven Material, welches keine katalytische Wirkung aufweist, bestehen kann.

In weiterer Ausgestaltung der Erfindung ist vorgesehen, dass vor dem Anordnen des mindestens einen Magnetrings oder des Magnetrads dessen Außenumfangsfläche und/oder die Aufnahmefläche mittels Sand- oder Kugelstrahlens aufgeraut werden/wird. Dadurch verbessert sich die Haftung des Klebemittels und lässt sich die Belastbarkeit der später ausgebildeten Verbindung steigern.

Unter wirtschaftlichen Gesichtspunkten ist es im Hinblick auf ein kostengünstiges Verfahren von Vorteil, wenn das aus der zwischen dem mindestens einen Magnetring oder dem Magnetrad und dem Polradgehäuse ausgebildeten Verbindungsfuge austretende Klebemittel abgesaugt und wiederverwendet wird, was die Erfindung schließlich auch vorsieht.

In Ausgestaltung des Magnetsystems zeichnet sich die Erfindung dadurch aus, dass der mindestens eine Magnetring oder das Magnetrad zwischen jeweils aneinander liegenden Einzelpermanentmagneten und/oder zwischen jeweils aneinander liegenden, mehrere Einzelpermanentmagnete umfassenden Magnetsegmenten und/oder zwischen jeweils aneinander liegenden, den Träger ausbildenden Blech- oder Metallsegmenten eine kraftschlüssige Verbindung aufweist.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. Die Zeichnung zeigt in:
- Fig. 1: in schematischer Darstellung eine Draufsicht auf einen Magnetring,
- Fig. 2: eine vergrößerte Darstellung des Ausschnittes A aus Fig. 1,
- Fig. 3: eine perspektivisch schematische Darstellung mehrerer Magnetringe vor dem Zusammenbau zu einem Magnetrad,
- Fig. 4: eine schematische Darstellung eines Führungselements,

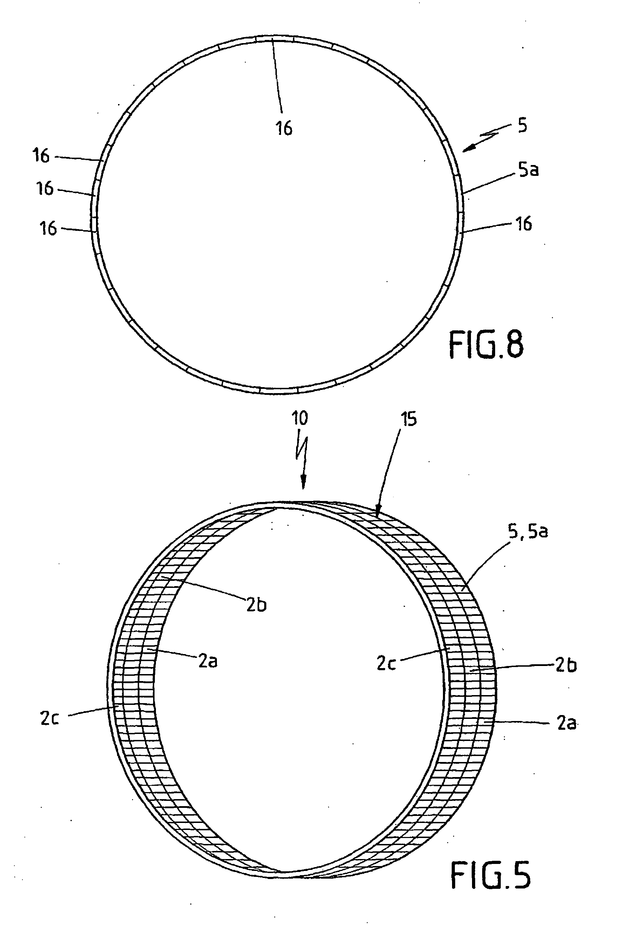

- Fig. 5: in schematischer Perspektivdarstellung ein aus mehreren Magnetringen zusammengesetztes Magnetrad,
- Fig. 6: ein Polradgehäuse mit einer Aufnahmefläche für ein Magnetrad,
- Fig. 7: eine alternative Ausführungsform einer Magnetanordnung in Teilansicht,
- Fig. 8: einen Rückschlussring und in
- Fig. 9: ein mit einem Magnetring ausgestattetes Polradgehäuse.

Eine Windenergieanlage oder Windkraftanlage umfasst im Wesentlichen einen Rotor mit Nabe und Rotorblättern und eine Maschinengondel, die den Generator umgibt. Die Umwandlung der mittels der Rotorblätter erzeugten mechanischen Leistung in elektrische Leistung erfolgt beispielsweise mittels eines vielpoligen Generators, vorzugsweise eines Synchrongenerators, der mit der Drehzahl des Rotors betrieben wird und in der Maschinengondel untergebracht ist. Ein solcher vielpoliger Generator weist einen Ständer oder Stator mit Wicklungen und einen den Ständer umgebenden Läufer oder Rotor (Außenläufer) oder einen vom Ständer umgebenen Läufer oder Rotor (Innenläufer) auf.

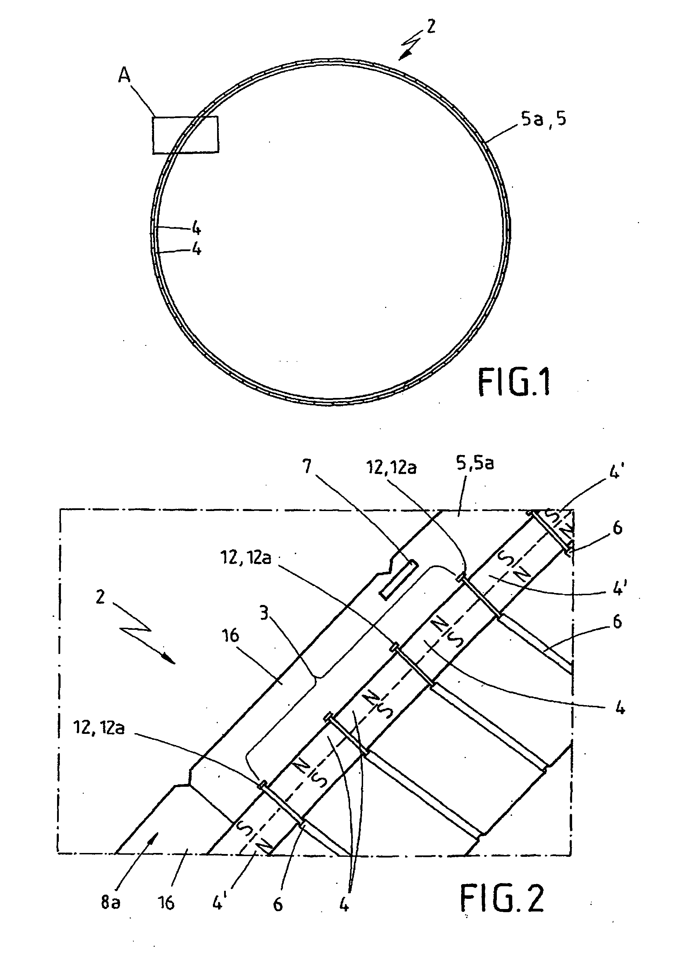

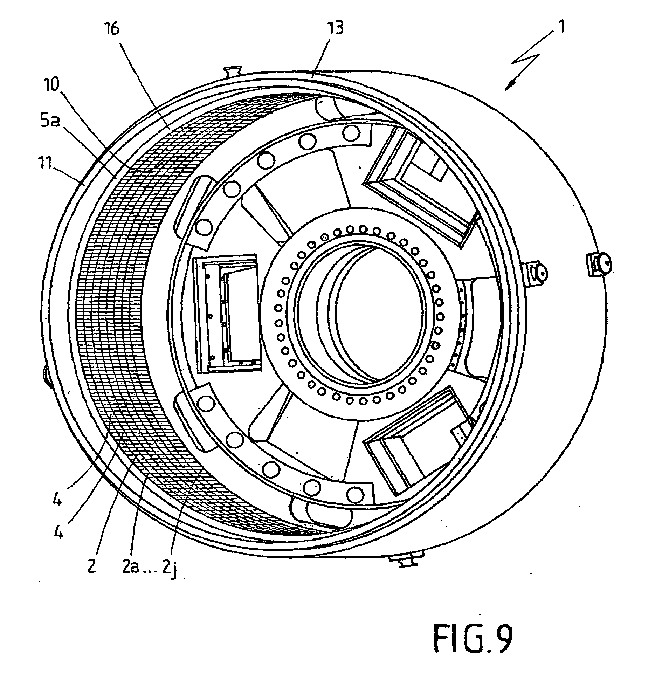

Im Ausführungsbeispiel ist ein Außenläufer dargestellt, der ein in Fig. 9 dargestelltes Magnetsystem 1 ausbildet, das mehrere Magnetringe 2, 2a - 2j, 2', 2a', 2b', 2c' umfasst, die zu einem Magnetrad 10 zusammengesetzt sind, welches innenseitig auf einer Aufnahmefläche 14 in ein Polradgehäuse 11 eingebaut ist. Jeder Magnetring 2, 2a - 2j, 2', 2a', 2b', 2c' weist eine Vielzahl an rund um den Umfang des jeweiligen Magnetringes angeordneten Einzelpermanentmagneten 4, 4' auf, wobei jeweils drei nebeneinander angeordnete und gleichpolig ausgerichtete Einzelpermanentmagnete 4, 4' ein Magnetsegment 3, 3' ausbilden. Die Magnetsegmente 3, 3' ihrerseits sind mit abwechselnder Polaritätsausrichtung nebeneinander angeordnet, wie dies der Fig. 2 zu entnehmen ist. Hierbei sind der Südpol S und der Nordpol N jeweils in radialer Richtung ausgerichtet, so dass abwechselnd in Umfangsrichtung jeweils ein Magnetsegment 3 mit außenliegendem Nordpolbereich und innenliegendem Südpolbereich und ein Magnetsegment 3' mit außenliegendem Südpolbereich und innenliegendem Nordpolbereich aufeinander folgen. Jedes Magnetsegment 3, 3' wiederum besteht aus mehreren Einzelpermanentmagneten 4, 4', die mit jeweils gleich ausgerichteter Polarität längsseitig nebeneinander angeordnet sind, um die Wirbelstromverluste zu reduzieren, die bei großen Polflächen ansonsten sehr hoch wären. Im Ausführungsbeispiel ist ein Magnetsegment 3, 3' jeweils aus drei Einzelpermanentmagneten 4, 4' zusammengesetzt. Denkbar sind aber auch Magnetsegmente 3, 3' mit einer davon abweichenden Anzahl an Einzelpermanentmagneten 4, 4'. Die Einzelpermanentmagnete 4, 4' sind aus einem Metall der Seltenen Erden hergestellt, insbesondere aus einem hochpermeablen gesinterten Metallpulver unter Verwendung dieser Metalle hergestellt.

Zur Leistungsoptimierung eines einen Außenläufer mit einem Magnetrad 10 aufweisenden Generators sind die Lücken zwischen den benachbarten Einzelpermanentmagneten 4, 4' jeweils möglichst klein gehalten. Zu diesem Zweck sind die Einzelpermanentmagnete 4, 4' innenseitig in einen einen Rückschlussring 5a ausbildenden Träger 5 eingesetzt, wobei der mit den Einzelpermanentmagneten 4, 4' ausgestattete Rückschlussring 5a dann jeweils einen Magnetring 2, 2', 2a' - 2c', 2a - 2j ausbildet.

Der Rückschlussring 5a ist aus einzelnen Metallsegmenten 16 zusammengesetzt, die aneinanderliegend den kreisringförmigen Rückschlussring 5a ausbilden. Die einzelnen Metallsegmente 16 können über Verbindungslaschen miteinander verbunden und miteinander verschweißt sein. Insbesondere werden diese kraftschlüssig dann zusammengepresst, wenn der Rückschlussring 5a mit den darin eingesetzten Einzelpermanentmagneten 4, 4' in das Polradgehäuse 11 eingesetzt und dann längs der Aufnahmefläche 14 bei Erkalten des erwärmten Polradgehäuses 11 zusammengepresst wird, wie dies nachstehend erläutert ist.

Um die einzelnen Einzelpermanentmagnete 4, 4' während der Montage mit einem möglichst geringen Abstand zueinander an dem Rückschlussring 5a anordnen zu können, ist dieser mit Aufnahmeelementen 12 in Form von in axialer Richtung verlaufenden nutenförmigen Schlitzen 12a versehen, die gleichmäßig über seine Innenumfangsfläche verteilt mit einem der Breite eines Einzelpermanentmagneten 4, 4' entsprechenden Abstand ausgebildet sind. In diese nutförmigen Schlitze 12a wird jeweils ein querschnittlich Doppel-T-förmiges Halteelement 6 mit der Funktion einer Klammer eingesetzt. Zwischen jeweils zwei Halteelementen 6 ist dann jeweils ein Einzelpermanentmagnet 4, 4' angeordnet und von den Halteelementen 6 an der Innenseite des Rückschlussrings 5a festgelegt. Hierbei weisen die Halteelemente 6 eine ganz geringe Dickenerstreckung auf, so dass zwischen aneinander angrenzenden Einzelpermanentmagneten 4, 4' lediglich eine äußerst schmale Lücke besteht. Der Rückschlussring 5a weist eine solche Stärke oder Dicke auf, dass auf seiner Außenseite bei auf seiner Innenseite aufgebrachten Einzelpermanentmagneten 4, 4' keine Magnetkraft mehr feststellbar ist, und somit keine Magnetkraft nach außen wirkt. Zur Herstellung des Rückschlussringes 5a oder der Metallsegmente 16 wird vorzugsweise ein Stahlmaterial mit einem möglichst hohen Eisenanteil und einem geringen Anteil an Legierungselementen verwendet.

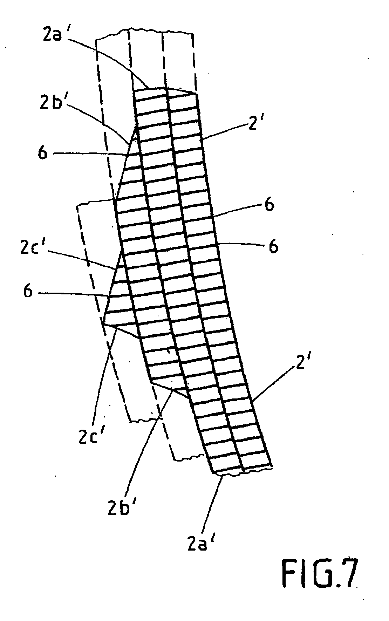

Die Aufnahmeelemente 12 können wie dies in Fig. 7 durch die darin eingesetzten Halteelemente 6 angedeutet ist, leicht schräg mit einer Steigung von 6° - 20° geneigt ausgerichtet sein. Auch können die Aufnahmeelemente 12 schienenförmig ausgebildet sein.

Die Dimensionierung von Rückschlussring 5a, den Magnetsegmenten 3, 3' und den Einzelpermanentmagneten 4, 4' ist so aufeinander abgestimmt, dass sich um den Innenumfang des Rückschlussringes 5a herum gleichmäßig verteilt eine gerade Anzahl an Magnetsegmenten 3, 3' ergibt, wobei sich dann jeweils Magnetsegmente 3, 3' mit gleich oder identisch ausgerichteter Polarität jeweils diametral gegenüberliegen. Beim Zusammenbau wird nun so vorgegangen, dass zwischen den einzelnen Halteelementen 6 zunächst die Magnetsegmente 3 mit gleicher Polaritätsausrichtung innenseitig am Rückschlussring 5a angeordnet werden und anschließend erst in die dann bestehenden Zwischenräume die Magnetsegmente 3' mit der entgegengesetzt ausgerichteten Polarität eingeschoben werden. Hierbei bilden die Halteelemente 6 zwischen jeweils aneinanderliegenden Einzelpermanentmagneten 4, 4' Trennwände und Führungsschienen aus, so dass sowohl bei sich abstoßender gleich ausgerichteter Polarität als auch bei sich anziehender Polarität ein jeweiliger Einzelpermanentmagnet 4, 4' sicher zwischen zwei Halteelementen 6 geführt in axialer Richtung des Rückschlussringes 5a in seine jeweils vorgesehene Position eingeschoben werden kann.

Der Rückschlussring 5a ist dünnwandig ausgebildet und aus einzelnen Blechsegmenten 16 zusammengesetzt.

Mehrere der aus jeweils einem Rückschlussring 5a mit darin eingesetzten Einzelpermanentmagneten 4, 4' bestehenden Magnetringen 2, 2', 2a - 2j, 2a', 2b', 2c' werden entsprechend der jeweils gewünschten und vorgesehenen Leistung des damit ausgestatteten Generators oder Polrades zu einem Magnetrad 10 zusammengesetzt. Hierzu werden die einzelnen Magnetringe 2, 2', 2a' - 2c', 2a - 2j in axialer Richtung des Magnetrades 10 Stück für Stück seitlich aneinandergesetzt, bis die gewünschte Anzahl an Magnetringen vorhanden ist. Bei dem in Fig. 9 dargestellten, mit einem Magnetrad 10 ausgestatteten Polradgehäuse 11 sind elf Magnetringe 2 - 2j zur Ausbildung des Magnetrades 10 aneinandergereiht. In der Zusammenbauposition der einzelnen Magnetringe zu dem Magnetrad 10 liegen dabei zumindest bereichsweise gleichpolige Magnetsegmente 3, 3' und somit sich abstoßende Pole der Einzelpermanentmagnete 4, 4' in axialer Richtung des Magnetrades 10 aneinander. Während des Zusammenbaus des Magnetrads 10 kommt es daher infolge der gleichpolig aneinanderliegenden Magnetsegmente 3, 3' zueinander benachbarter Magnetringe 2, 2', 2a - 2 j, 2a' - 2c' zu einer abstoßenden Kraftwirkung in axialer Richtung, d.h. in Richtung parallel zur Magnetringachse oder Magnetradachse. Hierbei weisen die jeweils aneinanderliegenden Magnetringe zusätzlich infolge der Magnetkräfte der Magnetsegmente 3, 3' mit gleicher Polarität oder gleicher Polaritätsausrichtung das Bestreben auf, sich auf eine stabile Nord-Süd-Position auszurichten, d.h. sich relativ zueinander so weit zu verdrehen, dass jeweils sich anziehende Magnetsegmente 3, 3' ungleicher Polaritätsausrichtung aneinanderliegen. Damit dies nicht möglich ist, müssen die Magnetringe 2, 2', 2a' - 2c', 2a - 2j während ihres Zusammenbaus zu einem Magnetrad 10 geführt und in ihrer relativen Position zueinander gehalten werden. Zu diesem Zweck sind in jedem Rückschlussring 5a eines jeweiligen Magnetringes mehrere Führungslöcher 7 in jeder der beiden Seitenflächen 8a, 8b gleichmäßig entlang des Umfangs ausgebildet. Die Führungslöcher 7 können entweder in regelmäßigen oder in unregelmäßigen Winkelabständen entlang des Umfangs in der jeweiligen Seitenfläche 8a, 8b ausgebildet sein. Wichtig ist nur, dass die in im Einbauzustand benachbart zueinander angeordneten Magnetringen 2 ausgebildeten Führungslöcher 7 in der Zusammenbauposition der jeweiligen Magnetringe zueinander korrespondierend, d.h. fluchtend oder mit einem durch ein Führungselement 9 überbrückten Versatz zueinander, ausgerichtet oder ausrichtbar sind. In ein jeweiliges Führungsloch 7, bei dem es sich. auch um eine Sackbohrung handeln kann, wird beim Zusammenbau des Magnetrads 10 jeweils ein stangen- oder stabförmiges Führungselement 9 mit seinem ersten Führungsabschnitt 9a eingesetzt. Ein zweiter Führungsabschnitt 9b des Führungselements 9 steht dann aus diesem Führungsloch 7 des Magnetringes 2 hervor und dient der Führung eines auf den jeweiligen Magnetring aufzustapelnden weiteren Magnetringes. Dazu wird der zweite Führungsabschnitt 9b in ein zu dem Führungsloch 7 korrespondierendes Führungsloch 7 des aufzustapelnden Magnetringes, beispielsweise des Magnetringes 2a, eingesetzt, so dass der aufzustapelnde Magnetring 2a ausgerichtet gegen den Magnetring 2 gedrückt werden kann, ohne das infolge der wirkenden Magnetkräfte eine Verdrehung beider Magnetringe 2, 2a zueinander eintritt. Somit sind zueinander benachbarte Magnetringe, beispielsweise die Magnetringe 2 und 2a, mittels der Führungselemente 9 aufschichtbar und zueinander ausrichtbar.

Die Befestigung der zueinander benachbarten Magnetringe 2, 2', 2a' - 2c', 2a - 2j erfolgt dabei mittels einer stoffschlüssigen Verbindung an den entsprechenden Seitenflächen 8a, 8b, die die Seitenflächen des Rückschlussringes 5a und der Einzelpermanentmagnete 4, 4' umfassen. Zu diesem Zweck wird vor dem Aufstapeln der einzelnen Magnetringe zumindest eine der aneinander angrenzenden Seitenflächen 8a oder 8b eines Magnetringes mit einem anaerob härtenden Klebemittel beschichtet, der die stoffschlüssige Verbindung zu dem daran anliegenden Magnetring 2, 2' ausbildet. Das Klebemittel ist ein anaerob härtendes Klebemittel in Form eines Einkomponentenklebstoffs, der unter Sauerstoffausschluss aushärtet. Die im Klebemittel enthaltene Härterkomponente bleibt inaktiv, solange sie mit dem Sauerstoff der Luft in Berührung steht. Sobald das Klebemittel vom Sauerstoff abgeschlossen wird, was bei dem Aufeinanderstapeln und anschließenden Aufeinanderpressen von aneinanderliegenden Seitenflächen 8a, 8b zweier Magnetringe der Fall ist, erfolgt die Aushärtung sehr schnell, insbesondere bei gleichzeitigem Metallkontakt. Durch die Kapillarwirkung des flüssigen Klebemittels werden sogar die kleinsten Zwischenräume im Fügebereich ausgefüllt. Das ausgehärtete Klebemittel ist danach in den Rauhtiefen der zu verbindenden Seitenflächen 8a, 8b der zueinander benachbarten Magnetringe verankert. Der Aushärtungsvorgang wird durch den Kontakt des Klebemittels mit den Metalloberflächen der beiden Seitenflächen 8a, 8b der zueinander benachbarten Metallringe initiiert, so dass die Metalloberflächen demnach als Katalysator wirken.

Für den Fall, dass die Seitenflächen 8a, 8b der Magnetringe aus einem nichtmetallischen Material, also einem für die Verklebung passiven Material, bestehen, kann vor dem Beschichten mit dem anaerob härtenden Klebemittel ein Aktivator auf zumindest eine der beiden angrenzend zueinander angeordneten Seitenflächen 8a, 8b der miteinander zu verbindenden Magnetringe aufgebracht werden. Die Aufbringung eines Aktivators empfiehlt sich deshalb, weil solche passiven Materialien nur eine geringe oder überhaupt keine katalytische Wirkung besitzen, die für das Aushärten des anaeroben Klebemittels notwendig ist. Auch bei Metallen mit hohen passiven Eigenschaften, wie zum Beispiel Chrom und Edelstahl, empfiehlt sich der Einsatz eines Aktivators, um Fehlklebungen zu vermeiden. Eine Verklebung dieser Art dichtet zusätzlich die Verbindungsstelle gegen korrosive Medien ab. Darüber hinaus weist ein solches anaerob härtendes Klebemittel eine gute Beständigkeit gegenüber mechanischen Schwingungen und eine gute Beständigkeit bei dynamischen Dauerlasten auf.

Bei Verwendung eines anaerob härtenden Klebemittels mit oder ohne Aktivator ist gewährleistet, dass der Härteprozess der Verbindung zwischen den jeweiligen Magnetringen erst nach Kontakt zweier Magnetringe einsetzt.

Bei dem vorstehend beschriebenen Ausführungsbeispiel sind die in den Seitenflächen 8a, 8b eines jeweiligen Magnetringes 2, 2', 2a - 2j, 2a' - 2c' ausgebildeten Führungslöcher 7 bei allen Magnetringen an gleicher Umfangsposition in Bezug zu den rund um den Umfang eines Magnetringes angeordneten Magnetsegmenten 3, 3' ausgebildet. Dadurch entsteht dann ein aus mehreren Magnetringen geschichtetes oder gestapeltes Magnetrad 10 mit parallel zur Magnetringachse oder Magnetradachse oder Magnetsystemachse angeordneten Magnetsegmenten 3, 3', wobei Magnetsegmente gleicher Polaritätsausrichtung in Linie aneinandergereiht sind. Die Halteelemente 6 bilden folglich eine von Einzelpermanentmagnet 4, 4' zu Einzelpermanentmagnet 4, 4' aneinander anliegender Magnetringe gerade und parallel zur Magnetradlängsachse verlaufende Linie aus, wie dies für ein aus elf Magnetringen 2 - 2j bestehendes Magnetrad 10 des Magnetsystems 1 in Fig. 9 dargestellt ist.

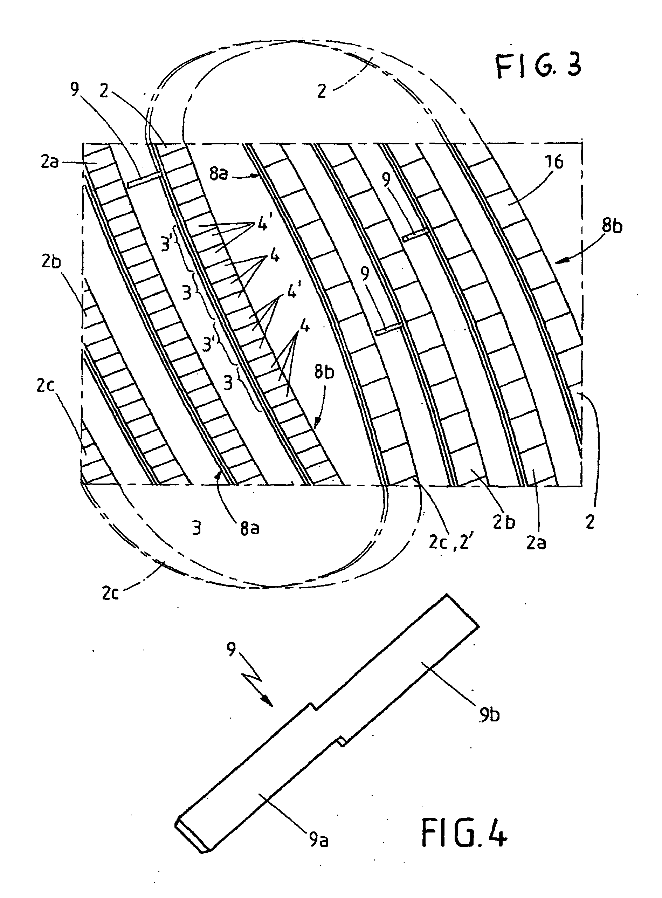

Um ein Magnetradsystem 10 mit räumlich gekrümmten und schräg zur Magnetradachse verlaufenden Magnetsegmenten 3, 3' bereitzustellen, wie dies in Fig. 7 schematisch dargestellt ist, ist in einem zweiten Ausführungsbeispiel vorgesehen, dass der zweite Führungsabschnitt 9b zu dem ersten Führungsabschnitt 9a des jeweiligen Führungselements 9 in Umfangsrichtung der jeweiligen Magnetringe seitlich versetzt ausgebildet ist. Ein solches Führungselement 9 ist in Fig. 4 dargestellt. Dabei ist der Versatz zwischen dem ersten Führungsabschnitt 9a und dem zweiten Führungsabschnitt 9b des Führungselements 9 derart ausgebildet, dass in der Zusammenbauposition eines Magnetrades 10 die Magnetsegmente 3, 3' und/oder die Einzelpermanentmagnete 4, 4' der einzelnen Magnetringe in Richtung der Magnetringachse in axialer Richtung von Magnetring zu Magnetring jeweils gegeneinander versetzt angeordnet sind. Hierbei kann der Versatz zwischen dem ersten Führungsabschnitt 9a und dem zweiten Führungsabschnitt 9b des jeweiligen Führungselements 9 derart ausgebildet sein, dass in der Zusammenbauposition des Magnetrades 10 die aneinander zugeordneten Magnetsegmente 3, 3' gleicher Polaritätsausrichtung der einzelnen Magnetringe in Bezug auf die Magnetringachse in axialer Richtung treppenförmig versetzt angeordnet sind. Ob die zwischen den Einzelpermanentmagneten 4, 4' durch die Halteelemente 6 gebildete Trennungslinie parallel oder schräg, insbesondere unter einem Winkel von 6° - 20° zur Magnetradachse oder Magnetringachse, verläuft, wird dabei von der dies bestimmenden Ausrichtung der Aufnahmeelemente 12 bestimmt. Der Versatz zwischen dem ersten Führungsabschnitt 9a und dem zweiten Führungsabschnitt 9b des Führungselements 9 in Umfangsrichtung der Magnetringe kann hierbei im Wesentlichen kleiner als ein Kreisabschnitt eines jeweiligen Magnetsegments 3 sein. Alternativ ist es aber auch möglich, die nutenförmigen Schlitze 12 schräg geneigt auszubilden und durch entsprechende geometrische Ausbildung der Einzelpermanentmagnete 4, 4' eine entsprechend schräg ausgerichtete Anordnung der Einzelpermanentmagnete 4, 4' zu erhalten.

Ein Magnetrad 10 mit räumlich gekrümmten und schräg zur Magnetsystemachse verlaufenden Seitenkanten/Seitenflächen der Magnetsegmente 3, 3' kann auch mit einem stabförmigen Führungselement 9 ohne versetzte erste und zweite Führungsabschnitte 9a, 9b bereitgestellt werden, in dem gemäß eines weiteren Ausführungsbeispiels die in einander zugeordneten Seitenflächen 8a, 8b eines jeweiligen Magnetringes ausgebildeten Führungslöcher 7 in Bezug zu den rund um den Umfang der Magnetringe jeweils angeordneten Magnetsegmenten 3 versetzt ausgebildet sind, d.h. auf jeder der beiden Seitenflächen 8a, 8b eine andere Relativposition zu den Aufnahmeelementen 12 aufweisen. Der Versatz zwischen den Führungslöchern 7 in den einander zugewandten Seitenflächen 8a, 8b benachbarter Magnetringe kann wiederum derart ausgebildet sein, dass in der Zusammenbauposition des Magnetrades 10 die Magnetsegmente 3, 3' mit gleicher Polaritätsausrichtung von Magnetring zu Magnetring in Bezug auf die Magnetringachse in axialer Richtung unter einem Winkel von 6° bis 20° im Wesentlichen schräg verlaufend angeordnet sind. Alternativ ist es aber auch wiederum denkbar, dass der Versatz zwischen den Führungslöchern 7 jeweils benachbarter Magnetringe derart ausgebildet ist, dass in Zusammenbauposition des Magnetrades 10 die Magnetsegmente 3, 3' gleicher Polaritätsausrichtung von Magnetring zu Magnetring in Bezug auf die Magnetringachse in axialer Richtung treppenförmig versetzt angeordnet sind. Der Versatz zwischen den Führungslöchern 7 benachbarter Magnetringe in Umfangsrichtung der Magnetringe kann im Wesentlichen kleiner als ein Kreisabschnitt eines jeweiligen Magnetsegments sein.

Insgesamt bestehen somit zur Ausrichtung der Einzelpermanentmagnete 4, 4' und der Magnetsegmente 3, 3' sowohl jeweils in einem einzelnen Magnetring als auch in ihrer Ausrichtung von Magnetring zu Magnetring bei zu einem Magnetrad 10 zusammengefügten Magnetringen verschiedene konstruktive Möglichkeiten. Um die Einzelpermanentmagnete 4, 4' auf dem jeweiligen Träger 5 senkrecht zum Seitenrand des ringförmigen Trägers 5 oder parallel zur Magnetringachse auszurichten, besteht die Möglichkeit, die Aufnahmeelemente 12 und damit die darin geführten und gehaltenen Halteelemente 6 entsprechend auszurichten. Zwischen zwei Halteelemente 6 können dann rechteckige, quaderförmige Einzelpermanentmagnete 4, 4' von der Seite eingeschoben werden. Wenn beabsichtigt ist, schräg geneigt angeordnete Einzelmagnetsegmente 4, 4' auf einem Träger 5 anzuordnen, so kann dies dadurch geschehen, dass die Aufnahmeelemente 12 des Trägers 5 und folglich die darin oder daran angeordneten Halteelemente 6 mit einer entsprechenden Neigung von 6° - 20° in Bezug auf die durch den Magnetringmittelpunkt verlaufende Magnetringachse oder Magnetradachse ausgebildet und angeordnet werden. Zwischen zwei Halteelementen 6 lässt sich dann ein in der Aufsicht parallelogrammförmiger Quader eines Einzelpermanentmagneten 4, 4' anordnen. Bei aneinanderliegenden Magnetringen lässt sich die Relativposition der Einzelpermanentmagnete 4, 4' zueinander von Magnetring zu Magnetring durch die entsprechende Ausbildung der Führungslöcher 7 in den jeweiligen Seitenflächen 8a, 8b sowie die Ausgestaltung der Führungselemente 9 variierbar festlegen. So ist es möglich, dass die Einzelpermanentmagnete 4, 4' von Magnetring zu Magnetring jeweils versetzt zueinander angeordnet sind und die Halteelemente 6 ebenfalls einen stufenförmigen Versatz von Magnetring zu Magnetring aufweisen. Es ist aber auch möglich, die Einzelmagnetsegmente 4, 4' linienförmig in einer Reihe zueinander anzuordnen, so dass die aneinandergereihten Halteelemente 6 dann im Magnetrad 10 eine durchgehende Linie ausbilden, die schräg geneigt, mit einem Winkel von 6° - 20° oder aber auch gerade, d.h. parallel zur durch den Magnetradmittelpunkt verlaufenden Magnetradachse, ausgerichtet sind.

Zur Erhöhung der magnetischen Polfühligkeit, die in Kombination mit einem genuteten Anker einer Maschine entsteht, muss ein Ankerblechpaket so geschichtet werden, dass die Nuten schräg zur Mittelachse stehen. Das erschwert die Verwendung von Wicklungen aus Rahmenspulen, die zur Maximierung der Ausnutzung der Maschine notwendig sind. Um einen ungeschrägten Anker verwenden zu können, muss aber das Magnetsystem 1 oder ein Magnetrad 10 geschrägt sein, was bei Verwendung einfacher rechteckiger Magnetsegmente 3, 3' nicht möglich ist. Der gleiche Effekt lässt sich aber erzielen, wenn statt gerader Führungselemente 9 Sprünge oder Stufen aufweisende Führungselemente oder solche mit versetzten Führungsabschnitten 9a, 9b verwendet werden, wie dies in Fig. 4 dargestellt ist. So entsteht ein Magnetsystem 1 mit treppenförmig, versetzten Magnetringen 2', 2a' - 2c' was elektrisch der Schrägung gleich kommt und in Fig. 7 schematisch dargestellt ist.

Insgesamt wird durch die Erfindung ein ein Polrad 13 umfassendes Magnetsystem 1 vom Typ eines Außenläufers bereitgestellt, das ein aus einzelnen Magnetringen 2, 2', 2a, 2b, 2c, 2d, 2e, 2f, 2g, 2h, 2i, 2j, 2a' - 2c' mit mehreren magnetisierten Magnetsegmenten 3, 3' abwechselnder Polarität aufgebautes Magnetrad 10 umfasst und das bei einem Generator einer Windenergieanlage verwendet werden kann.

Auch wenn das beschriebe Magnetsystem Ähnlichkeiten mit an sich bekannten Vorrichtungen aufweisen mag, so ist es hier besonders bedeutsam, dass ein derartiges Magnetsystem auch im Bereich von hoch belasteten Bauteilen einer Windenergieanlagen zur Anwendung kommt und dabei mit Erfolg verwendet werden kann.

Das das Polradgehäuse 11 mit darin eingesetztem Magnetrad 10 umfassende Magnetsystem 1 besteht somit aus einzelnen, aufgrund der Verbindung mittels eines Klebstoffes ggf. gegeneinander elektrisch isolierten Magnetringen, die entsprechend der axialen Gesamtlänge des Magnetrades 10 zu einem Paket aufgestapelt werden und einen dünnwandigen Rückschlussring 5a zur Führung der Magnetfeldlinien und zur Abschirmung nach außen bilden. Das Paket erhält seine mechanische Festigkeit auch mittels Halterungen oder Streben oder Führungselementen 9, die vorzugsweise in magnetisch unbelasteten Zonen eingeschweißt werden.

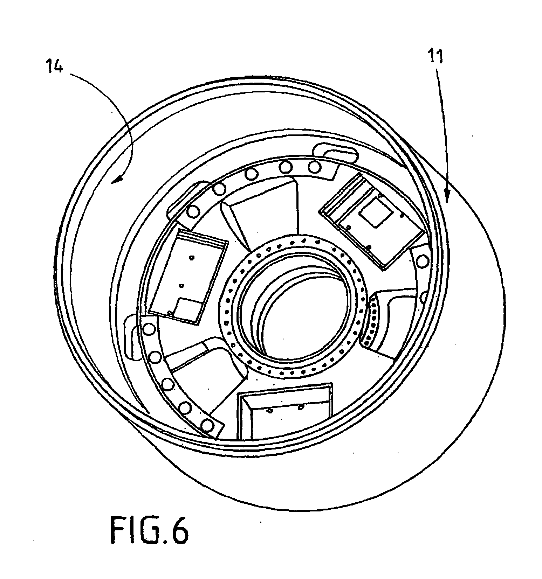

Das aus mehreren Magnetringen bestehende ringförmige Magnetrad 10 wird bei der Herstellung des Polrades 13 mit dem in Figur 6 dargestellten Polradgehäuse 11 verbunden, wobei das Magnetrad 10 in dem Polradgehäuse 11 innen liegend angebracht wird. Das Polradgehäuse 11 kann aus Gründen der Gewichtseinsparung aus einem magnetisch unwirksamen Material bestehen. Im Innenumfang des Polradgehäuses 11 ist eine Aufnahmefläche 14 ausgebildet. Die Aufnahmefläche 14 kann beispielsweise eine minimale Vertiefung oder Auskehlung sein, die an die geometrische Abmessung des Magnetrades 10 zur Ausbildung einer Verbindung mit dem Polradgehäuse 11 angepasst ist.

Zur Herstellung des Polrades wird - in einem ersten Schritt - das Polradgehäuse 11 leicht erwärmt, um das Polradgehäuse 11 und das Magnetrad 10 fügen zu können. Das Polradgehäuse 11 wird auf eine Temperatur erwärmt, bei der sich der Innendurchmesser des Polradgehäuses 11, insbesondere der Durchmesser der Aufnahmefläche 14, auf einen Durchmesser ausdehnt, der größer als der Außendurchmesser des Magnetrades 10 ist.

In einem dem Erwärmen des Polradgehäuses 11 folgenden Schritt wird dann das Magnetrad 10 in der oder an der in der Innenumfangsfläche des Polradgehäuses 11 ausgebildeten Aufnahmefläche 14 angeordnet.

In einem darauf folgenden Schritt wird das Polradgehäuse 11 abgekühlt oder man lässt das Polradgehäuse abkühlen, so dass das Polradgehäuses 11 auf das Magnetrad 10 aufschrumpft. Dem Aufschrumpfen liegt somit das Prinzip der Wärmeausdehnung zugrunde, bei dem die miteinander zu verbindenden beiden Teile nicht passgenau, sondern das Polradgehäuse 11 geringfügig zu klein oder das Magnetrad 10 geringfügig zu groß angefertigt sind, so dass beide Teile bei Normaltemperatur, d.h. in der Regel Raum- oder Umgebungstemperatur, nicht miteinander verbunden werden können. Durch Erwärmung dehnt sich der jeweils erwärmte Gegenstand aus und schrumpft anschließend wieder bei Abkühlung. So schrumpft das Polradgehäuse 11 bei seiner Abkühlung und wird auf das Magnetrad 10 gepresst. Das Abkühlen des Polradgehäuses 11 kann beispielsweise bei Umgebungstemperatur stattfinden.

In einem Schritt des Verfahrens wird die Außenumfangsfläche des Magnetrades 10, d.h. die Außenseite des Rückschlussringes 5a, mit einem Klebemittel 15 beschichtet. Alternativ kann aber auch die Aufnahmefläche 14 des Polradgehäuses 11 mit einem Klebemittel beschichtet werden. Denkbar ist es ferner auch, sowohl die Außenumfangsfläche des Magnetrades 10 als auch die Aufnahmefläche 4 des Polradgehäuses 11 mit einem Klebemittel zu beschichten. Das Beschichten der Außenumfangsfläche des Magnetrads 10 oder der Aufnahmefläche 4 des Polradgehäuses 11 oder beider Flächen gemeinsam kann dabei zu den verschiedensten Zeitpunkten während der Durchführung des Fügeverfahrens zur Verbindung dieser beiden Bauteile durchgeführt werden. Beispielsweise kann das Beschichten vor dem Erwärmen des Polradgehäuses 11, vor dem Anordnen des Magnetrades 10 oder vor dem Abkühlen des Polradgehäuses 11 erfolgen.

Das beim Beschichten verwendete Klebemittel ist ebenfalls ein anaerob härtendes Klebemittel in Form eines Einkomponentenklebstoffs, der unter Sauerstoffausschluss bei Raumtemperatur aushärtet. Die im flüssigen Klebemittel enthaltene Härterkomponente bleibt inaktiv, solange sie mit dem Sauerstoff der Luft in Berührung steht. Sobald das Klebemittel 15 vom Sauerstoff abgeschlossen wird, was bei dem Fügen oder Aufschrumpfen des Polradgehäuses 11 auf das Magnetrad 10 der Fall ist, erfolgt die Aushärtung sehr schnell, insbesondere bei gleichzeitigem Metallkontakt. Durch die kapillare Wirkung des flüssigen Klebemittels 15 werden sogar kleinste Zwischenräume im Fügebereich ausgefüllt. Das ausgehärtete Klebemittel ist danach in den Rauhtiefen der zu verbindenden Teile verankert. Der Aushärtungsvorgang wird durch den Kontakt des Klebemittels 15 mit den Metalloberflächen von Polradgehäuse 11 und Magnetrad 10 initiiert, so dass diese Metalloberflächen demnach als Katalysator wirken. So können metallische Werkstoffe miteinander verklebt werden.

Für den Fall, dass das Polradgehäuse 11 aus einem nichtmetallischen Material, also einem für die Verklebung zunächst passiven Material, besteht, kann vor dem Beschichten mit dem anaerob härtenden Klebemittel 15 ein Aktivator auf die Aufnahmefläche 14 des Polradgehäuses 11 aufgebracht werden. Sollte die Außenumfangsfläche des Magnetrads 10 eine Schicht eines nichtmetallischen Materials aufweisen, so kann auch diese Fläche mit einem Aktivator beschichtet werden. Die Aufbringung eines Aktivators empfiehlt sich deshalb, weil passive Materialien nur eine geringe oder überhaupt keine katalytische Wirkung besitzen, die für das Aushärten des anaeroben Klebemittels aber notwendig ist. Auch bei Metallen mit hohen passiven Eigenschaften, wie zum Beispiel Chrom und Edelstahl, empfiehlt sich der Einsatz eines Aktivators, um Fehlklebungen zu vermeiden. Eine Verklebung dieser Art dichtet zusätzlich die Verbindungsstelle von Polradgehäuse 11 und Magnetrad 10 gegen korrosive Medien ab. Darüber hinaus weist ein solches anaerob härtendes Klebemittel 15 eine gute Beständigkeit gegenüber mechanischen Schwingungen und eine gute Beständigkeit bei dynamischen Dauerlasten auf.

Unabhängig davon, ob ein Aktivator verwendet wird oder nicht, kann das Verfahren einen zusätzlichen Schritt aufweisen, bei dem vor dem Anordnen des Magnetrades 10 die Außenumfangsfläche des Magnetrades 10, d.h. die Außenfläche des Rückschlussrings 5a, oder die Aufnahmefläche 14 des Polradgehäuses 11 mittels Sand- oder Kugelstrahlens aufgerauht wird. Denkbar ist aber auch, beide Flächen mittels Sand- oder Kugelstrahlens aufzurauhen. Durch diese Maßnahme verbessert sich die Haftung des Klebemittels 15 und die Belastbarkeit der zwischen dem Polradgehäuse 11 und dem aus Rückschlussringen 5a gebildeten Metallbad ausgebildeten Verbindung.

Das vorstehend beschriebene Verfahren kombiniert beim Abkühlen des Polradgehäuses 11 folglich einen Klebevorgang und einen Pressvorgang, die gemeinsam und gleichzeitig ihre Wirkung zur Herstellung der Verbindung von Polradgehäuse 11 und Magnetrad 10 entfalten. Beim Abkühlen des Polradgehäuses 11 umschließt dieses das Magnetrad 10 mit einer leichten Pressung nach Art eines Kraftschlusses, wobei die Klebeverbindung einen Stoffschluss bewirkt. Hierbei kann eine vertieft mit einem Seitenrand ausgebildete Aufnahmefläche 14 auch noch Formschlussanteile beitragen. Jedenfalls wird dadurch dem zwischen der Außenumfangsfläche des Magnetrades 10 und der Aufnahmefläche 14 des Polradgehäuses 11 befindlichen Klebemittel 15 der Kontakt mit Sauerstoff entzogen, womit es aushärten kann und eine hochfeste Verbindung in Form eines Stoffschlusses in der Fuge entsteht. Durch das Abkühlen des Polradgehäuses 11 und das damit verbundene Umschließen des Magnetrades 10 werden die Einzelpermanentmagnete 4, 4' und die einzelnen Magnetsegmente 3, 3' des Magnetrades 10 gegeneinander und/oder gegen die Halteelemente 6 gedrückt. Ebenso werden die einzelnen Metallsegmente 16 des Trägers 5 gegeneinander gepresst oder gedrückt. Alle diese Elemente bilden somit ggf. untereinander zusätzlich eine Verbindung nach Art eines Kraftschlusses aus. Beim Abkühlen des Polradgehäuses 11 und Aufschrumpfen auf das Magnetrad 10 wird somit eine stoffschlüssige Verbindung zwischen dem Polradgehäuse 11 und dem Magnetrad 10 und eine zumindest kraftschlüssige Verbindung zwischen den einzelnen Magnetsegmenten 3, 3' oder den Einzelpermanentmagneten 4, 4' des Magnetrades 10 oder zwischen diesen Elementen und den jeweils anliegenden Halteelementen 6 hergestellt und so zusammen mit dem Polradgehäuse 11 das Magnetsystem 1 ausgebildet.

Um einem Überschuss an verwendetem Klebemittel 15 aus wirtschaftlichen Aspekten zu begegnen, empfiehlt es sich, das aus der zwischen dem Magnetrad 10 und dem Polradgehäuse 11 ausgebildeten Verbindungsfuge austretende Klebemittel 15 abzusaugen und wiederzuverwenden.

Insgesamt wird somit ein Verfahren zur Herstellung eines Polrades 13 vom Typ eines Außenläufers mittels einer "Schrumpfklebeverbindng" bereitgestellt, das stoffschlüssige und kraftschlüssige Verbindungen zwischen dem Polradgehäuse 11 und dem Magnetrad 10 und zwischen den einzelnen Magnetsegmenten 3, 3' und/oder den Einzelpermanentmagneten 4, 4' und den Halteelementen 6 des Magnetrades 10 aufweist. Mittels der "Schrumpfklebeverbindung" ergibt sich eine deutliche Verbesserung gegen auftretende Scherkräfte und Biegemomente, wobei die verbundenen Bauteile auf der gesamten Länge fast unlösbar miteinander verbunden sind.

Ein nach diesem Verfahren hergestelltes Polrad 13 vom Typ eines Außenläufers mit einem Magnetrad 10 mit mehreren magnetisierten Magnetsegmenten 3, 3' abwechselnder Polaritätsausrichtung und einem Polradgehäuse 11 kann bei einem Generator einer Windenergieanlage Verwendung finden.

Auch wenn das beschriebe Verfahren Ähnlichkeiten mit an sich bekannten Verfahren aufweisen mag, so ist es hier besonders bedeutsam, dass ein derartiges Verfahren zur Herstellung einer Klebe- und Schrumpfverbindung auch im Bereich von hoch belasteten Bauteilen einer Windenergieanlagen zur Anwendung kommen und dabei mit Erfolg verwendet werden kann.

## Patentansprüche

1. Verfahren zur Herstellung eines ein Polrad (13) umfassenden Magnetsystems (1) eines vielpoligen Generators einer Windkraftanlage oder Windenergieanlage, umfassend
• die Verbindung eines Polradgehäuses (11) mit mindestens einem, eine Vielzahl kreisringförmig angeordnete Einzelpermanentmagnete (4, 4') aufweisenden Magnetring (2) oder einem mindestens einen Magnetring (2) und einen diesen tragenden Träger (5) aufweisenden Magnetrad (10) durch Erwärmen des Polradgehäuses (11) auf eine Temperatur, bei der sich der Innendurchmesser einer eine Aufnahmefläche (14) ausbildenden Innenumfangsfläche des Polradgehäuses (11) auf eine Größe ausdehnt, die größer als der Außendurchmesser des Magnetrings (2) oder des Magnetrads (10) ist,
• die Anordnung des mindestens einen Magnetrings (2) oder des Magnetrads (10) in oder an der Aufnahmefläche (14) und
• das Aufschrumpfen des Polradgehäuses (11) auf den mindestens einen Magnetring (2) oder das Magnetrad (10) durch Abkühlung des Polradgehäuses (11) auf Raum- oder Umgebungstemperatur,
**dadurch gekennzeichnet,**
**dass** vor dem Erwärmen des Polradgehäuses (11) und/oder vor dem Anordnen des Magnetrings (2) oder des Magnetrads (10) und/oder vor der Abkühlung des Polradgehäuses (11) die Außenumfangsfläche des mindestens einen Magnetrings (2) oder .Magnetrads (10) und/oder die Aufnahmefläche (14) derart mit einem Klebemittel (15) versehen wird, dass sich beim Aufschrumpfen des Polradgehäuses (11) aus dem Klebemittel (15) eine stoffschlüssige Verbindung zwischen dem Polradgehäuse (11) und dem mindestens einen Magnetring (2) oder Magnetrad (10) ausbildet.

2. Verfahren nach Anspruch 1, **dadurch gekennzeichnet, dass** beim Aufschrumpfen eine kraftschlüssige Verbindung zwischen jeweils aneinander liegenden Einzelpermanentmagneten (4, 4') und/oder zwischen jeweils aneinander liegenden, mehrere Einzelpermanentmagnete (4, 4') umfassenden Magnetsegmenten (3, 3') und/oder zwischen jeweils aneinander liegenden, den Träger (5) ausbildenden Blech- oder Metallsegmenten (16) ausgebildet wird.

3. Verfahren nach Anspruch 1 oder 2, **dadurch gekennzeichnet, dass** ein anaerob härtendes Klebemittel (15) verwendet wird.

4. Verfahren nach einem der vorhergehenden Ansprüche, **dadurch gekennzeichnet, dass** vor einer Benetzung mit dem anaerob härtenden Klebemittel (15) ein Aktivator auf die Außenumfangsfläche des mindestens einen Magnetrings (2) oder des Magnetrads (10) und/oder auf die Aufnahmefläche (14) aufgebracht wird.

5. Verfahren nach einem der vorhergehenden Ansprüche, **dadurch gekennzeichnet, dass** vor dem Anordnen des mindestens einen Magnetringes (2) oder des Magnetrads (10) dessen Außenumfangsfläche und/oder die Aufnahmefläche (14) mittels Sand- oder Kugelstrahlens aufgeraut werden/wird.

6. Verfahren nach einem der vorhergehenden Ansprüche, **dadurch gekennzeichnet, dass** das aus der zwischen dem mindestens einen Magnetring (2) oder dem Magnetrad (10) und dem Polradgehäuse (11) ausgebildeten Verbindungsfuge austretende Klebemittel (15) abgesaugt und wieder verwendet wird.

7. Magnetsystem (1) eines vielpoligen Generators einer Windkraftanlage oder einer Windenergieanlage, umfassend ein ein Polradgehäuse (11) aufweisendes Polrad (13) mit mindestens einem in dem Polradgehäuse (11) angeordneten, aus einem Träger (5) mit daran angeordneten Einzelpermanentmagneten (4, 4') aufgebauten Magnetring (2) und/oder mit einem einen solchen Magnetring (2) aufweisenden Magnetrad (10), **dadurch gekennzeichnet, dass** das Polrad (13) zwischen seinem Polradgehäuse (11) und dem mindestens einen Magnetring (2) oder dem Magnetrad (10) eine stoffschlüssige Verbindung aufweist, wobei das Magnetsystem (1) mittels eines Verfahrens nach einem der Ansprüche 1 bis 6 hergestellt ist.

8. Magnetsystem (1) nach Anspruch 7, **dadurch gekennzeichnet, dass** der mindestens eine Magnetring (2) oder das Magnetrad (10) zwischen jeweils aneinander liegenden Einzelpermanentmagneten (4, 4') und/oder zwischen jeweils aneinander liegenden, mehrere Einzelpermanentmagnete (4, 4') umfassenden Magnetsegmenten (3, 3') und/oder zwischen jeweils aneinander liegenden, den Träger (5) ausbildenden Blech- oder Metallsegmenten (16) eine kraftschlüssige Verbindung aufweist.

## Claims

1. Method for producing a magnet system (1), which comprises a pole wheel (13), of a multipole generator of a wind powder installation or wind energy installation, comprising
• the connection of a pole wheel housing (11) to at least one magnet ring (2) which has a multiplicity of individual permanent magnets (4, 4') arranged in the form of a circular ring, or to a magnet wheel (10) which has at least one magnet ring (2) and a support (5) supporting it, by heating the pole wheel housing (11) to a temperature at which the internal diameter of an internal circumferential surface, which forms a retraining surface (14), of the pole wheel housing (11) expands to a size which is greater than the external diameter of the magnet ring (2) or of the magnet wheel (10),
• the arrangement of the at least one magnet ring (2) or of the magnet wheel (10) in or on the retaining surface (14), and
• the shrinking of the pole wheel housing (11) onto the at least one magnet ring (2) or the magnet wheel (10) by cooling down the pole wheel housing (11) to room temperature or ambient temperature, **characterised in that**, before the heating of the pole wheel housing (11) and/or before the arrangement of the magnet ring (2) or of the magnet wheel (10) and/or before the cooling down of the pole wheel housing (11), the external circumferential surface of the at least one magnet ring (2) or magnet wheel (10) and/or the retraining surface (14) is provided with an adhesive (15) such that an integral connection is formed between the pole wheel housing (11) and the at least one magnet ring (2) or magnet wheel (10) from the adhesive (15) when the pole wheel housing (11) is shrunk on.

2. Method according to claim 1, **characterised in that**, during the shrinking-on process, a non-positive connection is formed between individual permanent magnets (4, 4') which rest on one another and/or between magnet segments (3, 3') which rest on one another and comprise a plurality of individual permanent magnets (4, 4') and/or between sheet metal or metal segments (16) which rest on one another and form the support (5).

3. Method according to either claim 1 or claim 2, **characterised in that** an anaerobically curing adhesive (15) is used.

4. Method according to any of the preceding claims, **characterised in that**, before wetting with the anaerobically curing adhesive (15), an activator is applied to the external circumferential surface of the at least one magnet ring (2) or of the magnet wheel (10) and/or to the retaining surface (14).

5. Method according to any of the preceding claims, **characterised in that**, before the arrangement of the at least one magnet ring (2) or of the magnet wheel (10), the external circumferential surface and/or the retaining surface (14) thereof are/is roughened by means of sandblasting or shotblasting.

6. Method according to any of the preceding claims, **characterised in that** the adhesive (15) which emerges from the connecting joint which is formed between the at least one magnet ring (2) or the magnet wheel (10) and the pole wheel housing (11) is sucked out and reused.

7. Magnet system (1) of a multipole generator of a wind power installation or of a wind energy installation, comprising a pole wheel (13) which has a pole wheel housing (11) and has at least one magnet ring (2), which is arranged in the pole wheel housing (11) and is formed from a support (5) with individual permanent magnets (4, 4') arranged thereon, and/or has a magnet wheel (10) which has a magnet ring (2) of this type, **characterised in that** the pole wheel (13) has an integral connection between its pole wheel housing (11) and the at least one magnet ring (2) or the magnet wheel (10), the magnet system (1) being produced by means of a method according to any of claims 1 to 6.

8. Magnet system (1) according to claim 7, **characterised in that** the at least one magnet ring (2) or the magnet wheel (10) has a non-positive connection between individual permanent magnets (4, 4') which rest on one another and/or between magnet segments (3, 3') which rest on one another and comprise a plurality of individual permanent magnets (4, 4') and/or between sheet metal or metal segments (16) which rest on one another and form the support (5).

## Revendications

1. Procédé de fabrication d'un système magnétique (1), comprenant un induit (13), d'un générateur multipolaire d'une éolienne ou d'une centrale éolienne, comprenant la jonction d'un boîtier d'induit (11) avec au moins un anneau magnétique (2) présentant une pluralité d'aimants permanents individuels (4, 4') agencés de manière à former une couronne ou avec une roue magnétique (10) présentant au moins un anneau magnétique (2) et un support (5) portant celui-ci, via le chauffage du boîtier d'induit (11) à une température à laquelle le diamètre intérieur d'une surface périphérique interne, formant une surface de logement (14), du boîtier d'induit (11) se dilate jusqu'à une taille supérieure au diamètre extérieur de l'anneau magnétique (2) ou de la roue magnétique (10),
l'agencement du au moins un anneau magnétique (2) ou de la roue magnétique (10) dans ou contre la surface de logement (14) et
la rétroaction du boîtier d'induit (11) sur le au moins un anneau magnétique (2) ou la roue magnétique (10) par refroidissement du boîtier d'induit (11) à la température de la pièce ou à la température ambiante,
**caractérisé en ce que**
avant le chauffage du boîtier d'induit (11) et/ou avant l'agencement de l'anneau magnétique (2) ou de la roue magnétique (10) et/ou avant le refroidissement du boîtier d'induit (11), la surface périphérique externe du au moins un anneau magnétique (2) ou de la roue magnétique (10) et/ou la surface de logement (14) est munie d'un adhésif (15) de telle sorte que, lors de la rétroaction du boîtier d'induit (11), à partir de l'adhésif (15), une jonction par liaison de matière se produise entre le boîtier d'induit (11) et le au moins un anneau magnétique (2) ou la roue magnétique (10).

2. Procédé selon la revendication 1, **caractérisé en ce que**, lors de la rétraction, une jonction par liaison de force soit produite entre les aimants permanents individuels (4, 4') situés respectivement les uns à côté des autres et/ou entre des segments magnétiques (3, 3') comprenant plusieurs aimants permanents individuels (4, 4') situés respectivement les uns à côté des autres et/ou entre des segments en tôle ou métalliques (16) situés respectivement les uns à côté des autres et constituant le support (5).

3. Procédé selon la revendication 1 ou 2, **caractérisé en ce qu'**est utilisé un adhésif (15) à durcissement anaérobie.

4. Procédé selon l'une des revendications précédentes, **caractérisé en ce que**, avant le mouillage avec l'adhésif (15) à durcissement anaérobie, un activateur est appliqué sur la surface périphérique externe du au moins un anneau magnétique (2) ou de la roue magnétique (10) et/ou sur la surface de logement (14).

5. Procédé selon l'une des revendications précédentes, **caractérisé en ce que**, avant l'agencement du au moins un anneau magnétique (2) ou de la roue magnétique (10), sa surface périphérique externe et/ou la surface de logement (14) est/sont rendue(s) rugueuse(s) par jet de sable ou de billes.

6. Procédé selon l'une des revendications précédentes, **caractérisé en ce que** l'adhésif (15) sortant du joint de raccordement formé entre le au moins un anneau magnétique (2) ou la roue magnétique (10) et le boîtier d'induit (11) est aspiré et réutilisé.

7. Système magnétique (1) d'un générateur multipolaire d'une éolienne ou d'une centrale éolienne, comprenant un induit (13), présentant un boîtier d'induit (11), avec au moins un anneau magnétique (2) agencé dans le boîtier d'induit (11) et constitué d'un support (5) avec des aimants permanents individuels (4, 4') agencés sur celui-ci et/ou avec une roue magnétique (10) présentant un tel anneau magnétique (2), **caractérisé en ce que** l'induit (13) présente, entre son boîtier d'induit (11) et le au moins un anneau magnétique (2) ou la roue magnétique (10), une jonction par liaison de matière, lequel système magnétique (1) est fabriqué au moyen d'un procédé selon l'une des revendications 1 à 6.

8. Système magnétique (1) selon la revendication 7, **caractérisé en ce que** le au moins un anneau magnétique (2) ou la roue magnétique (10) présente un jonction par liaison de force entre les aimants permanents individuels (4, 4') situés respectivement les uns à côté des autres et/ou entre les segments magnétiques (3, 3') comprenant plusieurs aimants permanents individuels (4, 4') situés respectivement les uns à côté des autres et/ou entre des segments en tôle ou métalliques (16) situés respectivement les uns à côté des autres et constituant le support (5).
